# FASCICULE DE BREVET EUROPEEN

(11) **EP 1 797 493 B1**
(45) Date de publication et mention de la délivrance du brevet: **21.11.2012**
(21) Numéro de dépôt: 05800641.2
(22) Date de dépôt: 26.09.2005
(51) Int. Cl.: B60N 3/06, G05G 1/34, G05G 1/60

(54) **AGENCEMENT DE REPOSE-PIEDS POUR UN VEHICULE AUTO-ECOLE**
FUSSABLAGEKONSTRUKTION FÜR EIN FAHRSCHULAUTO
FOOT-REST ARRANGEMENT FOR A DRIVING SCHOOL VEHICLE

(30) Priorité: 29.09.2004 FR 0410293
(43) Date de publication de la demande: 20.06.2007
(73) Titulaire: Renault SAS, 92100 Boulogne Billancourt (FR)
(72) Inventeur: BOUILLON, Jean-Charles, F-78340 LES CLAYES SOUS BOIS (FR)
(86) Numéro de dépôt international: PCT/FR2005/050783
(87) Numéro de publication internationale: WO 2006/035182

(56) Documents cités:
- DE-U1- 9 200 915
- US-A- 2 651 944
- US-A1- 2004 040 400

## Description

L'invention concerne un agencement pour l'intérieur d'un habitacle de véhicule automobile auto-école.

L'invention concerne plus particulièrement un agencement pour l'intérieur d'un habitacle de véhicule automobile de type auto-école, du type qui comporte au moins une place avant destinée à un conducteur du véhicule et une place avant destinée à un moniteur du conducteur, du type dans lequel chaque place est agencée en regard d'un pédalier qui comporte successivement, de la gauche vers la droite du véhicule, une pédale d'embrayage, une pédale de frein, et une pédale d'accélérateur du véhicule, et du type dans lequel la place avant du moniteur comporte au moins un repose-pied latéral agencé à gauche à proximité de la pédale d'embrayage associée.

On connaît de nombreux exemples d'agencements de ce type, comme représenté dans le document US-A-2004/0040400.

Dans un véhicule automobile de type auto-école, le moniteur est couramment sujet, au gré des leçons de conduite qu'il dispense, à une grande quantité de décélérations brutales résultant de calages ou de coup de freins mal dosés qui sont le fait de son élève.

Dans un agencement conventionnel du type décrit précédemment, le moniteur ne dispose que d'un seul repose-pied agencé à proximité de la pédale d'embrayage, c'est-à-dire conventionnellement à gauche de celle-ci. De ce fait, le moniteur est contraint de prendre appui sur le pied qui ne dispose pas de repose-pied à chaque décélération du véhicule, ce qui à la longue le fatigue inutilement.

Pour remédier à cet inconvénient, l'invention propose un agencement du type décrit précédemment, caractérisé en ce que la place avant du moniteur comporte de surcroît un repose-pied latéral supplémentaire agencé à droite à proximité de la pédale d'accélérateur associée.

Selon d'autres caractéristiques de l'invention :
- chaque repose-pied latéral comporte au moins une face plane inclinée destinée à recevoir un pied du moniteur,
- le pédalier associé à la place avant du moniteur est amovible,
- la place avant du moniteur comporte un repose-pied central amovible qui est destiné à être inséré de manière jointive entre les repose-pieds latéraux lorsque le pédalier associé est enlevé et dont une face plane inclinée est destiné à être alignée avec les faces planes inclinées des repose-pieds latéraux,
- la place avant du moniteur comporte un repose-pieds central amovible qui est destiné à être inséré de manière jointive entre les repose-pieds latéraux lorsque le pédalier associé est démonté et dont une face plane inclinée porte une plaque supérieure qui est destinée à s'étendre de part et d'autre du repose pied central pour recouvrir les faces planes inclinées des repose-pieds latéraux,
- le repose-pied central comporte une face inférieure munie d'une bande agrippante destinée à fixer le repose-pieds central sur un revêtement de sol en moquette du véhicule.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'un agencement selon l'invention représenté dans une configuration dans laquelle le pédalier est présent,
- la figure 2 est une vue en perspective d'un agencement selon l'invention représenté dans une configuration dans laquelle le pédalier a été démonté et dans laquelle un repose-pieds central est inséré entre les repose-pieds latéraux.
- la figure 3 est une vue en perspective d'un agencement selon l'invention représenté dans une configuration dans laquelle le pédalier a été démonté et dans laquelle un repose-pied central en variante est inséré entre les repose-pieds latéraux.

Dans la description qui va suivre, des chiffres de référence identiques désignent des pièces identiques ou ayant des fonctions similaires.

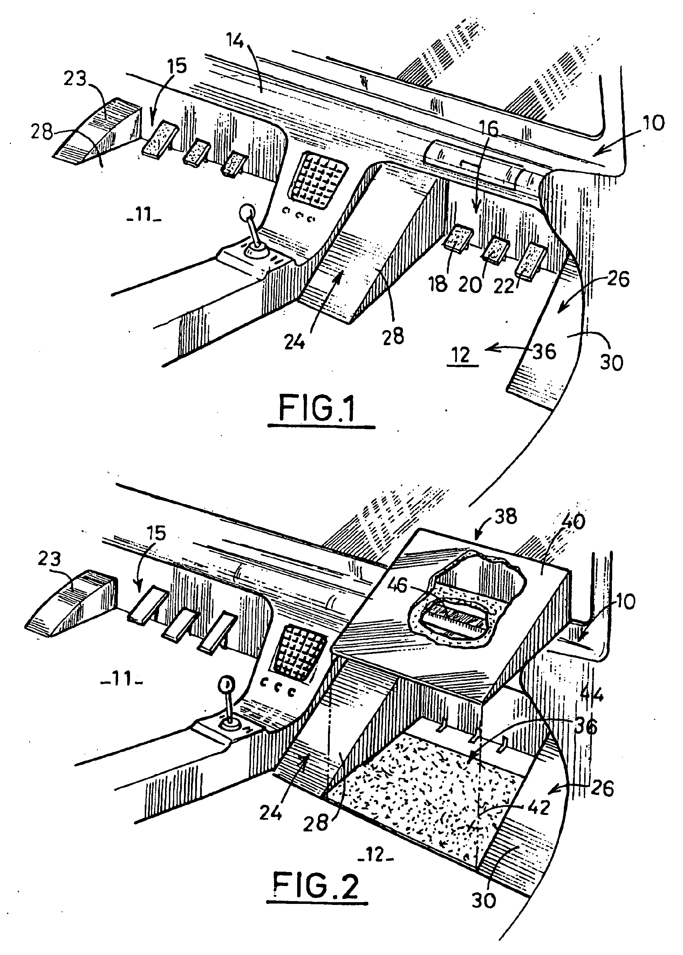

Par convention, les termes "supérieur" ou "inférieur" désignent respectivement des éléments ou des positions orientés respectivement vers le haut ou le bas des figures 1 et 2.

On a représenté à la figure 1 le détail d'un agencement 10 pour l'intérieur d'un habitacle de véhicule automobile de type auto-école réalisé conformément à l'invention.

De manière connue, l'agencement 10 comporte au moins une place avant 11 destinée à un conducteur du véhicule et une place avant 12 destinée à un moniteur du conducteur.

De manière connue, chaque place est agencée en regard d'un pédalier. En particulier, la place avant 11 du conducteur comporte un pédalier 15 et un repose-pieds 23, et la place 12 du moniteur est agencée en regard d'un pédalier 16.

Le pédalier 16 comporte successivement, de la gauche vers la droite du véhicule, une pédale d'embrayage 18, une pédale de frein 20, et une pédale d'accélérateur 22 du véhicule qui sont reliées par un dispositif (non représenté) au pédalier 15 du conducteur de manière à former une double commande du véhicule.

De manière connue, la place avant 12 du moniteur comporte au moins un repose-pied latéral 24 qui est agencé à gauche à proximité de la pédale d'embrayage 18 associée.

Au gré des leçons de conduite qu'il dispense, le moniteur est sujet à une grande quantité de décélérations brutales résultant de calages ou de coup de freins mal dosés qui sont le fait de son élève. De ce fait, dans un véhicule conventionnel, le moniteur est contraint de prendre appui sur le pied qui ne dispose pas de repose-pied à chaque décélération du véhicule, ce qui à la longue le fatigue inutilement.

Pour remédier à cet inconvénient, comme l'illustre la figure 1, la place avant 12 du moniteur comporte de surcroît un repose-pied latéral 26 supplémentaire qui est agencé à droite à proximité de la pédale 22 d'accélérateur associée.

Conformément à l'invention, chaque repose-pied latéral 24, 26 comporte au moins une face plane inclinée associée 28, 30 qui est destinée à recevoir un pied gauche ou droite du moniteur.

Chaque face plane 28 ou 30 propose donc une surface d'appui de grande taille au pied associé gauche ou droite du moniteur ce qui lui permet de reposer son pied et de prendre appui en cas de décélération brutale du véhicule.

De manière connue, le pédalier 16 associé à la place avant 12 du moniteur est amovible. En effet, le pédalier 16 peut être totalement ou partiellement démonté. C'est notamment le cas lorsque le véhicule n'est plus utilisé en tant que véhicule auto-école et doit être reconverti en véhicule conventionnel, ne comportant qu'un pédalier en regard de la place du conducteur, avant sa revente. Dans ce cas, il importe que le pédalier 16 soit démonté et qu'il ne subsiste aucune trace de l'usage antérieur du véhicule.

En particulier, il importe que la place 12 du moniteur ne laisse plus subsister de cavité du type de la cavité 36 qui est agencée sous le pédalier 16 entre les repose-pieds 24, 26, comme représenté à la figure 1.

A cet effet, comme l'illustre la figure 2, la place avant 12 du moniteur comporte un repose-pieds 38 central amovible qui est destiné à être inséré de manière jointive entre les repose-pieds 24, 26 latéraux lorsque le pédalier associé est démonté et dont une face plane 40 inclinée est destiné à être alignée avec les faces planes 28, 30 inclinées des repose-pieds 24, 26 latéraux.

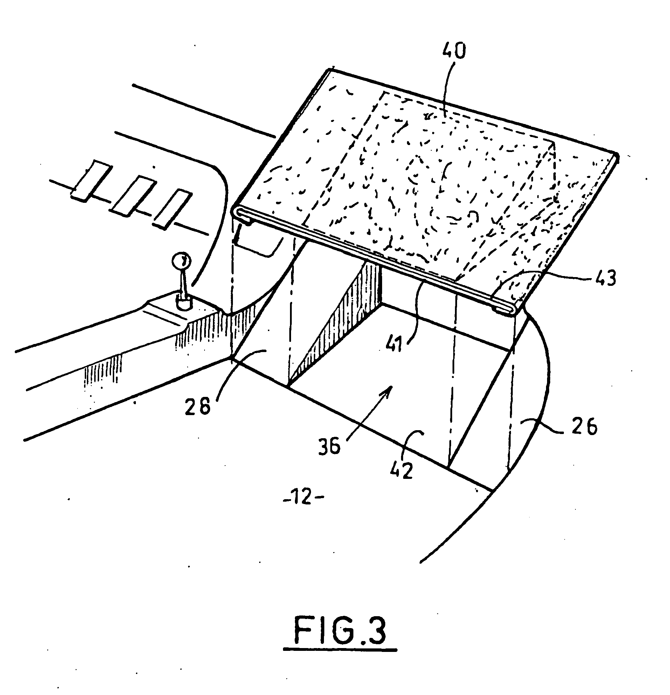

En variante, comme l'illustre la figure 3, la place avant 12 du moniteur comporte un repose-pieds 38 central amovible qui est destiné à être inséré de manière jointive entre les repose-pieds 24, 26 latéraux lorsque le pédalier associé 16 est démonté et dont une face plane 40 inclinée porte une plaque supérieure 41 qui est destinée à s'étendre de part et d'autre du repose pied central 38 pour recouvrir les faces planes 28, 30 inclinées des repose-pieds 24, 26 latéraux. Cette plaque supérieure 41 peut être recouverte d'un panneau de moquette 43.

Dans le mode de réalisation préféré de l'invention, le repose-pieds central 38 comporte une face inférieure 44 munie d'une bande agrippante 46 destinée à fixer le repose-pieds central 38 sur un revêtement 42 de sol en moquette du véhicule.

Il sera compris que cette caractéristique n'est pas limitative de l'invention, et que la bande agrippante 46 pourrait être portée par le revêtement 42, ou encore que le repose-pieds pourrait être fixé entre les repose-pieds 24, 26 par tout autre moyen de fixation connu.

## Revendications

1. Agencement (10) pour l'intérieur d'un habitacle de véhicule automobile de type auto-école, du type qui comporte au moins une place avant (11) destinée à un conducteur du véhicule et une place avant (12) destinée à un moniteur du conducteur, du type dans lequel chaque place (12) est agencée en regard d'un pédalier (15, 16) qui comporte successivement, de la gauche vers la droite du véhicule, une pédale (18) d'embrayage, une pédale (20) de frein, et une pédale (22) d'accélérateur du véhicule, et du type dans lequel la place avant (12) du moniteur comporte au moins un repose-pied (24) latéral agencé à gauche à proximité de la pédale (18) d'embrayage associée,
**caractérisé en ce que** la place avant (12) du moniteur comporte de surcroît un repose-pied (26) latéral supplémentaire agencé à droite à proximité de la pédale (22) d'accélérateur associée.

2. Agencement (10) selon la revendication précédente, **caractérisé en ce que** chaque repose-pied latéral (24, 26) comporte au moins une face plane (28, 30) inclinée destinée à recevoir un pied du moniteur.

3. Agencement (10) selon l'une quelconque des revendications précédentes, **caractérisé en ce que** le pédalier (16) associé à la place avant (12) du moniteur est amovible.

4. Agencement (10) selon la revendication précédente prise en combinaison avec la revendication 2, caractérisé que la place avant (12) du moniteur comporte un repose-pied (38) central amovible qui est destiné à être inséré de manière jointive entre les repose-pieds (24, 26) latéraux lorsque le pédalier associé (16) est démonté et dont une face plane (40) inclinée est destiné à être alignée avec les faces planes (28, 30) inclinées des repose-pieds (24, 26) latéraux.

5. Agencement (10) selon la revendication 3 prise en combinaison avec la revendication 2, caractérisé que la place avant (12) du moniteur comporte un repose-pieds (38) central amovible qui est destiné à être inséré de manière jointive entre les repose-pieds (24, 26) latéraux lorsque le pédalier associé (16) est démonté et dont une face plane (40) inclinée porte une plaque supérieure (41) qui est destinée à s'étendre de part et d'autre du repose pied central (38) pour recouvrir les faces planes (28, 30) inclinées des repose-pieds (24, 26) latéraux.

6. Agencement (10) selon l'une des revendications 4 ou 5, **caractérisé en ce que** le repose-pied (38) central comporte une face inférieure (44) munie d'une bande agrippante (46) destinée à fixer le repose-pied central (38) sur un revêtement (42) de sol en moquette du véhicule.

## Claims

1. Arrangement (10) for the inside of a driving school type motor vehicle passenger compartment, of the type which comprises at least one position (11) intended for a driver of the vehicle and one position (12) intended for a driving instructor, of the type in which each position (12) is arranged facing a pedal assembly (15, 16) which comprises successively, from the left to the right of the vehicle, a clutch pedal (18), a brake pedal (20), and an accelerator pedal (22), and of the type in which the instructor's position (12) comprises at least one lateral footrest (24) arranged on the left, near the associated clutch pedal (18),
**characterized in that** the instructor's position (12) also comprises an additional lateral footrest (26) arranged on the right, near the associated accelerator pedal (22).

2. Arrangement (10) according to the preceding claim, **characterized in that** each lateral footrest (24, 26) comprises at least one inclined plane (28, 30) intended to receive one of the instructor's feet.

3. Arrangement (10) according to either of the preceding claims, **characterized in that** the pedal assembly (16) associated with the instructor's position (12) is removable.

4. Arrangement (10) according to the preceding claim, combined with Claim 2, **characterized in that** the instructor's position (12) comprises a removable central footrest (38) which is intended to be inserted contiguously between the lateral footrests (24, 26) when the associated pedal assembly (16) is dismantled and of which one inclined plane (40) is intended to be aligned with the inclined planes (28, 30) of the lateral footrests (24, 26).

5. Arrangement (10) according to Claim 3, combined with Claim 2, **characterized in that** the instructor's position (12) comprises a removable central footrest (38) which is intended to be inserted contiguously between the lateral footrests (24, 26) when the associated pedal assembly (16) is dismantled and of which one inclined plane (40) carries an upper plate (41) which is intended to extend on both sides of the central footrest (38) to cover the inclined planes (28, 30) of the lateral footrests (24, 26).

6. Arrangement (10) according to either of Claims 4 and 5, **characterized in that** the central footrest (38) comprises a lower face (44) fitted with a clinging strip (46) intended to attach the central footrest (38) to a carpet floor covering (42) of the vehicle.

## Patentansprüche

1. Anordnung (10) für den Innenraum einer Fahrgastzelle eines Fahrschulenautos, jener Art, die mindestens einen Vordersitz (11), der für einen Fahrer des Fahrzeugs bestimmt ist, und einen Vordersitz (12), der für einen Fahrlehrer bestimmt ist, aufweist, jener Art, bei der jeder Sitz (12) gegenüber einem Pedalsystem (15, 16) angeordnet ist, das nacheinander von links nach rechts des Fahrzeugs ein Kupplungspedal (18), ein Bremspedal (20) und ein Fahrpedal (22) des Fahrzeugs umfasst, und jener Art, bei der der Vordersitz (12) des Fahrlehrers mindestens eine laterale Fußstütze (24) aufweist, die links nahe dem zugehörigen Kupplungspedal (18) angeordnet ist,
**dadurch gekennzeichnet, dass** der Vordersitz (12) des Fahrlehrers des Weiteren eine zusätzliche laterale Fußstütze (26) aufweist, die rechts nahe dem zugehörigen Fahrpedal (22) angeordnet ist.

2. Anordnung (10) nach dem vorhergehenden Anspruch, **dadurch gekennzeichnet, dass** jede laterale Fußstütze (24, 26) mindestens eine geneigt, ebene Fläche (28, 30) aufweist, die einen der Füße des Fahrlehrers aufnehmen soll.

3. Anordnung (10) nach einem der vorhergehenden Ansprüche, **dadurch gekennzeichnet, dass** das dem Vordersitz des Fahrlehrers zugeordnete Pedalsystem (16) entfernbar ist.

4. Anordnung (10) nach dem vorhergehenden Anspruch in Kombination mit Anspruch 2, **dadurch gekennzeichnet, dass** der Vordersitz (12) des Fahrlehrers eine entfernbare mittlere Fußstütze (38) aufweist, die dazu bestimmt ist, angrenzend zwischen den lateralen Fußstützen (24, 26) eingesetzt zu werden, wenn das zugehörige Pedalsystem (16) demontiert ist, und von der eine geneigte, ebene Fläche (40) auf die geneigten, ebenen Flächen (28, 30) der lateralen Fußstützen (24, 26) ausgerichtet werden soll.

5. Anordnung (10) nach Anspruch 3 in Kombination mit Anspruch 2, **dadurch gekennzeichnet, dass** der Vordersitz (12) des Fahrlehrers eine entfernbare mittlere Fußstütze (38) aufweist, die dazu bestimmt ist, angrenzend zwischen den lateralen Fußstützen (24, 26) eingesetzt zu werden, wenn das zugehörige Pedalsystem (16) demontiert ist, und von der eine geneigte, ebene Fläche (40) eine obere Platte (41) trägt, die sich auf beiden Seiten der mittleren Fußstütze (38) erstrecken soll, um die geneigten, ebenen Flächen (28, 30) der lateralen Fußstützen (24, 26) zu bedecken.

6. Anordnung (10) nach Anspruch 4 oder 5, **dadurch gekennzeichnet, dass** die mittlere Fußstütze (38) eine Unterseite (44) aufweist, die mit einem haftenden Band (46) versehen ist, das die mittlere Fußstütze (38) an einem Teppichbodenbelag (42) des Fahrzeugs befestigen soll.
